# EUROPEAN PATENT APPLICATION

(11) **EP 1 873 695 A2**
(43) Date of publication of application: **02.01.2008**
(21) Application number: 07106988.4
(22) Date of filing: 08.10.1998
(51) Int. Cl.: G06K 19/08, G06K 19/04, G11B 7/24, G11B 5/80, G11B 5/82, G11B 7/26

(54) **Storage medium and manufacture thereof**

(30) Priority: 31.03.1997 JP 8145297
(62) Divisional of application: 98911117.4
(71) Applicant: IntelligentDisc, Inc., Yokohama-shi, Kanagawa 222-0033 (JP)
(72) Inventor: Shigetomi, Takashi, Yokohama-shi Kanagawa-ken 224-0066 (JP); Komaki, Tsunematsu, Taito-ku Tokyo 111-0053 (JP)
(74) Representative: Vossius & Partner

(57) **Abstract**

A storage medium having intelligence and manufacture thereof which reduce load on a system main body when processing information stored in the storage medium and further manage and control an external system device by integrating the storage medium with electronic circuits adapted to the storage medium. An intelligent DVD (2) has an information recording surface (30) for recording information, and an electronic-circuit mounting surface (20) where electronic circuits are mounted at least on one portion. The intelligent DVD (2) is manufactured by a process of manufacturing the information recording surface, a process of manufacturing the electronic-circuit mounting surface, and a process of attaching the information recording surface and the electronic-circuit mounting surface to each other.

## Description

### Technical Field

The present invention relates to a storage medium and manufacture thereof, and more particularly to an intelligent (intelligence-added) storage medium and manufacture thereof.

### Background Art

Conventional storage media, known and already practically used, include an optical information storage medium for optically storing information such as an optical disk and an optical card, magnetic information storage medium for magnetically storing information such as magnetic disk and a magnetic card, and a magneto-optical disk (MO) and a magneto-optical card using a combinations of both storage media techniques.

Since these conventional storage media are mainly used for storing information, small-sized and large-capability media is preferred. The storage capability has increased every year by virtue of development of high-density recording and recording in multiple layers.

However, regarding physical or logical storing method for writing information on a storage medium, or the type of information written on the storage medium, an operator discriminably writes such information in the storage medium or the like, otherwise, a system itself reads the storage medium to discriminate (recognize) such information. Further, as a system for receiving a predetermined service by loading various OS and application programs on a standardized system device such as a network computer (NC) will soon be generally used, it is required to simplify the installation of such OS and application programs as much as possible.

### Disclosure of Invention

The present invention has been made in consideration of the above situation, and has its object to provide a storage medium which reduces the load on a system main body when processing information stored in the storage medium, and which manages and controls an external system device, by providing the storage medium with intelligence by integrating electronic circuits adapted to data stored in the storage medium on the storage medium itself, and a method for manufacturing the storage medium.

To attain the above object, the storage medium according to the present invention comprises an information recording surface for recording information and an electronic-circuit mounting surface where an electronic circuit is mounted at least at one portion.

The storage medium has a front and rear surfaces. The information recording surface is one of the front and rear surfaces, while the electronic-circuit mounting surface is the other one of the front and rear surfaces. Further, the electronic circuit includes an electronic device mounted on an insulating substrate including a printed circuit board and a ceramic substrate. Further, the electronic circuit includes a semiconductor circuit formed on a silicon wafer, ceramic substrate or an insulating substrate. Further, the electronic circuit has a layered structure. Further, the electronic circuit has communication means for communicating with outside. Further, the communication means includes a contact-type or non-contact type. Further, the communication means transmits energy superimposed with a signal. Further, the electronic circuit has power means for storing energy supplied from a battery which generates energy within itself, or the outside via a contact point, optical communication, wireless communication or induction. Further, the storage medium includes a magnetic disk, a magnetic card, an optical disk such as a CD or a DVD, a magneto-optical disk such as an MO, an optical card or a magneto-optical card.

Further, the method for manufacturing the storage medium according to the present invention comprises a step of manufacturing an information recording surface for recording information, a step of manufacturing an electronic-circuit mounting surface including an electronic circuit at least at one portion, and a step of attaching the information recording surface to the electronic-circuit mounting surface.

Further, the method for manufacturing a storage medium where an electronic circuit is mounted, according to the present invention, comprises a step of manufacturing an information recording surface for recording information, and a step of forming an electronic-device mounting surface including the electronic circuit at least at one portion, on the rear surface of the information recording surface.

Further, the method for manufacturing a storage medium where an electronic circuit is mounted, according to the present invention, comprises a step of manufacturing an electronic-circuit mounting surface including an electronic circuit at least at one portion, and a step of forming an information recording surface for recording information, on the rear surface of the electronic-circuit mounting surface.

The step of manufacturing the information recording surface includes a step of injecting a base, a step of forming a reflection film on the base, and a step of coating the reflection film with a protective film. Further, the step of manufacturing the electronic-circuit mounting surface includes a step of mounting an electronic circuit and a step of coating or forming a protective film or layer over the electronic circuit. Further, the step of mounting the electronic circuit includes a step of forming a conductive wiring and a step of mounting an insulating substrate including a printed circuit board and a ceramic substrate, where an electronic device is mounted, or a silicon wafer, ceramic substrate or insulating substrate, where a semiconductor circuit is formed. Further, the step of mounting the electronic circuit includes a step of forming a silicon wafer, a ceramic substrate or an insulating substrate, and a step of forming a semiconductor circuit on the silicon wafer, ceramic substrate or insulating substrate. Further, the storage medium includes a magnetic disk, a magnetic card, optical disks such as a CD or a DVD, magneto-optical disk such as an MO, an optical card, or a magneto-optical card.

Other objects and advantages besides those discussed above shall be apparent to those skilled in the art from the description of a preferred embodiment of the invention which follows. In the description, reference is made to accompanying drawings, which form a part thereof, and which illustrate an example of the invention, Such example, however, is not exhaustive of the various embodiments of the invention, and therefore reference is made to the claims which follow the description for determining the scope of the invention.

### Brief Description of Drawings

The accompanying drawings, which are incorporated in and constitute a part of the specification, illustrate embodiments of the invention and, together with the description, serve to explain the principles of the invention.
Fig. 1 is a perspective view showing an example of a storage medium according to an embodiment of the present invention used in a system (e.g., a personal computer);
Fig. 2 is a block diagram showing the construction of an intelligent DVD according to the embodiment; and
Fig. 3 is a flowchart showing an example of manufacture of the intelligent DVD according to the embodiment.

### Best Mode for Carrying Out the Invention

Preferred embodiments of the present invention will now be described in detail in accordance with the accompanying drawings.

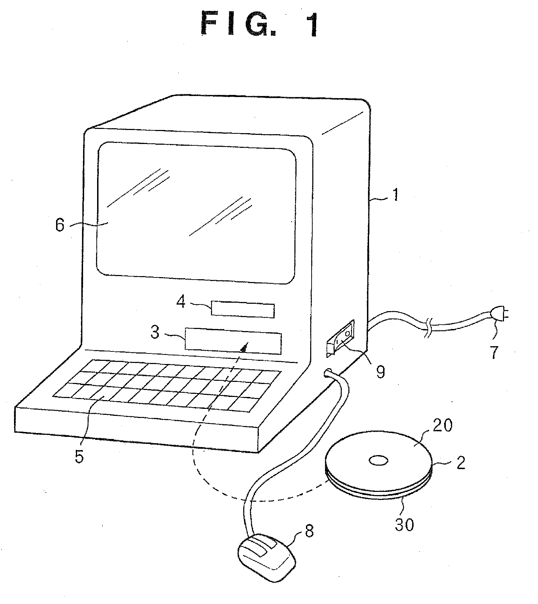

Fig. 1 is a perspective view showing an example of a storage medium according to an embodiment of the present invention used in a system (e.g., a personal computer).

Hereinbelow, description will be made by using a digital video disk (DVD) in the present embodiment, however, the present invention is also applicable to other removable storage media and fixed storage media such as a hard disk, and the present invention has similar advantages when applied these media. Further, the personal computer is used as a system main body, however, the system main body may be any device such as a television and a video tape recorder, a stereo tape recorder, a game player, a communication device, and a manufacturing device, as long as it uses the storage medium. For example, in a video tape recorder or a stereo tape recorder, electronic circuits of an intelligent DVD of the present embodiment is used as an auxiliary device of the system main body, while in a game player, a communication device, a manufacturing device or the like, the electronic circuits of the intelligent DVD are used as a main controller for the system.

In Fig. 1, reference numeral 1 denotes a personal computer system having a display device, a keyboard, a mouse, a floppy disk controller, an optical disk controller and the like; 2, an intelligent DVD of the present embodiment, comprising an electronic-circuit mounting surface 20 and an information recording surface 30; and 3, the intelligent DVD driver which drives the DVD for reading/writing information, when the intelligent DVD 2 of the present embodiment is set, the intelligent DVD driver 3 interfaces information with the electronic-circuit mounting surface 20 as well as it reads/writes information with respect to the information recording surface 30. In a case where a conventional DVD is set, the intelligent DVD driver 3 operates as a conventional optical disk driver. The judgment as to whether the installed DVD is the intelligent DVD or the conventional DVD may be made based on the difference between hardwares, or information recorded at a head reading position of the information recording surface 30. Numeral 4 denotes the floppy disk controller; 5, the keyboard; 6, the display device such as a CRT or a liquid crystal display; 7, a power input plug; 8, the mouse; and 9, a power switch.

### <Construction of Intelligent DVD>

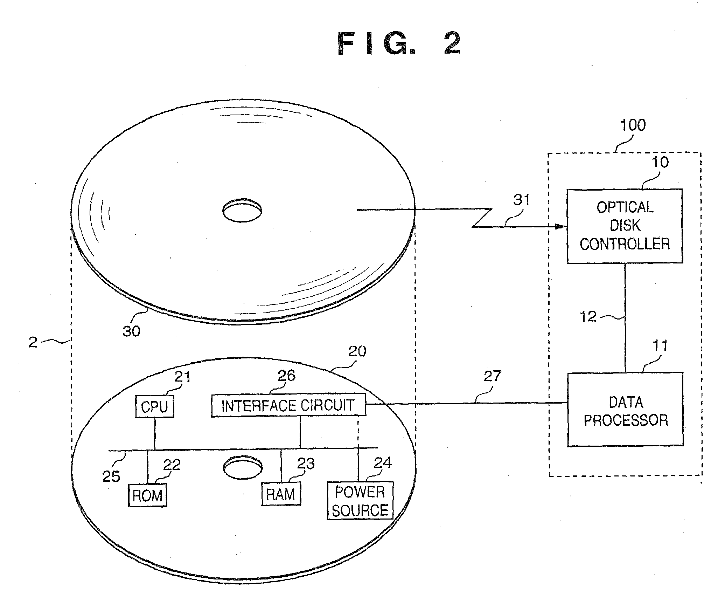

Fig. 2 is a block diagram showing the construction of the intelligent DVD 2 according to the present embodiment.

As shown in Fig. 2, the intelligent DVD 2 comprises the electronic-circuit mounting surface 20 and the information recording surface 30. The electronic-circuit mounting surface 20 has a CPU 21 as a controller, a ROM 22, a RAM 23 and an interface circuit 26 interconnected by a bus 25, and further, a power source 24 for supplying electricity to the respective electronic devices.

### (Electronic Circuit)

In Fig. 2, the electronic circuits mounted on the electronic-circuit mounting surface 20 comprises functionally individual parts and devices, however, the electronic devices may be mounted on an insulating substrate such as a printed circuit board and a ceramic substrate. Further, the devices may respectively be a combination of logic devices, a gate array, a single chip, an SOC (System On Chip) or the like. Further, the electronic devices may respectively be a semiconductor circuit formed on a silicon substrate, a ceramic substrate or an insulating substrate. Further, these substrates may be layered.

Note that a mounting position of the electronic circuits is preferably the center of electronic-circuit mounting surface 20 for stability of the interface and the disk, however, the electronic circuits may be mounted at another position as long as it is designed to maintain stability of the disk.

### (Power Source)

In Fig. 2, the power source 24 may be a battery or an air cell which generates electric energy from within itself by chemical change or the like, or it may receive energy from outside. When the power source 24 receives energy from outside, it may directly receive energy from a contact point, or it may receive energy by optical means, wireless means or induction, or combinations thereof. Further, the power source 24 may receive or transmit energy overlaid with a signal. Note that the power source 24 does not only supply electric power to the respective electronic devices mounted on the electronic-circuit mounting surface 20, but in another case, e.g., when the intelligent DVD 2 operates as a main controller of an external system, the power source 24 may be used as the power source for the external system. In this case, the intelligent DVD 2 may also play a role of "authentication card" to allow use of the external system. On the other hand, in a case where electric power is supplied by direct contact, from the system main body, it is unnecessary to provide the power source 24 on the intelligent DVD 2.

### (Interface)

In Fig. 2, numeral 27 denotes a communication path for communication between the controller and a data processor 11 of an external device 100 via the interface circuit 26 of the controller mounted on the electronic-circuit mounting surface 20, i.e., an interface signal line connecting the interface circuit 26 and the data processor 11. In practice, the interface signal line 27 uses a signal of the bus 25, or a signal transformed, converted, amplified or modulated from the bus 25 signal. The communication may be serial communication by parallel-serial conversion, superparallel communication (communication path has a bit width greater than that of a bus) or communication with error correction codes. Further, in the interface signal line 27, it is preferable that the hardware electrical connection conditions such as an electric signal and timing, the mechanical connection conditions of machines or mechanisms, software processing conditions such as a method, a protocol and the like, are standardized. Note that the interface signal line 27 may be contact type or non-contact type. Especially in the present embodiment, as writing/reading is optically performed with respect to the information recording surface 30, it is technically advantageous to use a non-contact type optical interface.

### (Information Recording Surface)

The information recording surface 30 in Fig. 2 is a surface where information on the intelligent DVD 2 of the present embodiment is stored, and is, e.g., a single surface of an optical disk. The storage format of information stored in the information recording surface 30 may be pit form as in an ordinary optical disk, or may be a magneto-optical disk form, or further, may be a form to perform recording while changing recording color. The information stored in the optical disk is read by the optical disk controller 10 as a read signal 31. The optical disk controller 10 of the present embodiment can read/write information when readable/writable optical disk such as a CD, an MO or a DVD is inserted.

In Fig. 2, an arrow 31 indicates that the optical disk controller 10 optically reads information from the information recording surface 30 of the intelligent DVD 2. Numeral 12 denotes a signal line for sending the information read from the information recording surface 30 to the data processor 11. The signal line 12 may be a unique signal line of the data processor 11 or system input/output bus.

### <System Using Storage Medium>

Next, an example of a system which uses the storage medium according to the present embodiment and the operation of the electronic circuit mounted on the electronic-circuit mounting surface 20 will be described.

### (First System)

In a first system, the data processor 11 (or the external device 100) is controlled as a peripheral device of the intelligent DVD 2 in Fig. 2. In this system, the interfaces between the storage, media and hardware peripheral devices is standardized (a system program or a microprogram may operate in the respective hardware peripheral devices), in place of a standard input-output system (e.g. BIOS) of a conventional system program (OS). More particularly, the data processor 11 is connected as a peripheral device of the electronic circuits as a controller mounted on the electronic-circuit mounting surface 20.

In this example, the intelligent DVD 2 is connected by the interface circuit 26 to the data processor 11 as a peripheral device via the interface signal line 27. As described above, a more general connection is realized by standardizing interface conditions for the intelligent DVD 2 and the data processor 11 or the external device 100, electrically (electrical connection conditions such as electric signals and timing), mechanically (connection conditions of machines or mechanisms), and in software (processing conditions, method, protocol and the like). Further, manufacturers can produce other products using the common interface for various purposes.

That is, if the interface conditions of the external device 100 are standardized for the intelligent DVD 2, the external device 100 as a peripheral device performs a predetermined processing in the data processor 11 even when the data processor 11 is further connected to other peripheral devices, and the data processor 11 is connectable to the intelligent DVD 2 using a predetermined interface conditions (standards), which correspond to the well-known BIOS technique as a standard input-output system. That is, any external device is connectable as long as it satisfies the interface conditions.

The operation of the system in this embodiment is as follows. First, the power of the system is turned on, then the intelligent DVD 2 is inserted into the intelligent DVD driver 3. A basic processing program of the CPU 21 is stored in the ROM 22. When the intelligent DVD 2 is inserted into the intelligent DVD driver 3, the program stored in the ROM 22 starts to run, and uses the RAM 23 in accordance with necessity. Thereafter, the data processor 11 operates as a peripheral device of the intelligent DVD 2 based on transmission/reception of a signal by the interface circuit 26, and performs data transmission/reception mutually with the intelligent DVD 2. Note that an extended RAM may be provided as a peripheral device.

Next, a necessary program such as a system program, information, data or the like is read from the information recording surface 30 via the optical disk controller 10, the signal line 12, the data processor 11, the interface signal line 27 and the interface circuit 26. The read data is processed or modified in accordance with necessity, or combined with data in the ROM 22 and/or RAM 23 in accordance with necessity, or further, a table is referred to and a control signal or data is generated based on the read data, then transmitted to the data processor 11 as the control signal or data, and is stored into the RAM 23 or an extended RAM in accordance with necessity, to start processing by the system. Note that the data processor 11 may be a video device, a display device or the like and not limited to any device.

### (Second System)

In a second system, a bootstrap program is stored in ROM 22, and a control program is stored as information in the information recording surface 30. The control program is read from the information recording surface 30 to start control. Hereinbelow, the operation of the second system will be described.

In this example, as the bootstrap is stored in the ROM 22 to read the control program from the information recording surface 30 of the intelligent DVD 2 via the optical disk controller 10, the signal line 12, the data processor 11, the interface signal line 27 and the interface circuit 26, when the intelligent DVD 2 is inserted, the control program and data stored in the information recording surface 30 are read by the boots strap to the RAM 23. Next, data transmission/reception between the data processor 11 and the information recording surface 30 is controlled based on the read control program. In this case, the control program may be a control program for data arithmetic-operation processing, a control program for code conversion, a program for error detection and correction, or a cryptanalysis program, as well as a program for controlling data transmission/reception.

The operation of the second system is as follows. First, when the intelligent DVD 2 is inserted into the intelligent DVD driver 3, an initial program is read from the information recording surface 30 of the intelligent DVD 2 into the RAM 23 by the program stored in the ROM 22. Next, the initial program starts to run, then, other programs and data are read from the information recording surface 30 of the intelligent DVD 2 into the RAM 23 via the optical disk controller 10, the signal line 12, the data processor 11, the interface signal line 27 and the interface circuit 26, by the initial program. Then, under the control of the CPU 21 based on the control program read from the information recording surface 30, arithmetic operation processing, code conversion processing, error detection and correction processing, cryptanalysis processing and the like, are performed on the signal read from the information recording surface 30. There may be no processing on the signal read from the information recording surface 30.

### (Third System)

In a third system, the data processor 11 comprises a variable circuit which operates in accordance with software such as a microprogram.

In this example, a microprogram for controlling the data processor 11 is also stored in the information recording surface 30 of the intelligent DVD 2. When the intelligent DVD 2 has been inserted, the CPU 21 reads the microprogram for controlling the data processor 11 from the information recording surface 30 by the bootstrap or processing/control program stored in the ROM 22 or the program read in the RAM 23, and performs necessary processing on the microprogram, and loads it onto the data processor 11 as a control microprogram. Then the data processor 11 starts its operation.

A signal path between the information recording surface 30 and the interface unit 26 and a signal path between the data processor 11 and the interface unit 26 may be a common path or separate paths. In Fig. 2, a common path is used, however, if separate paths are used, another signal line need to be provided in addition to the interface signal line 27, and separate signal lines. When these lines are commonly used, data must be identified for their respective communication.

### <Manufacture of Storage Medium>

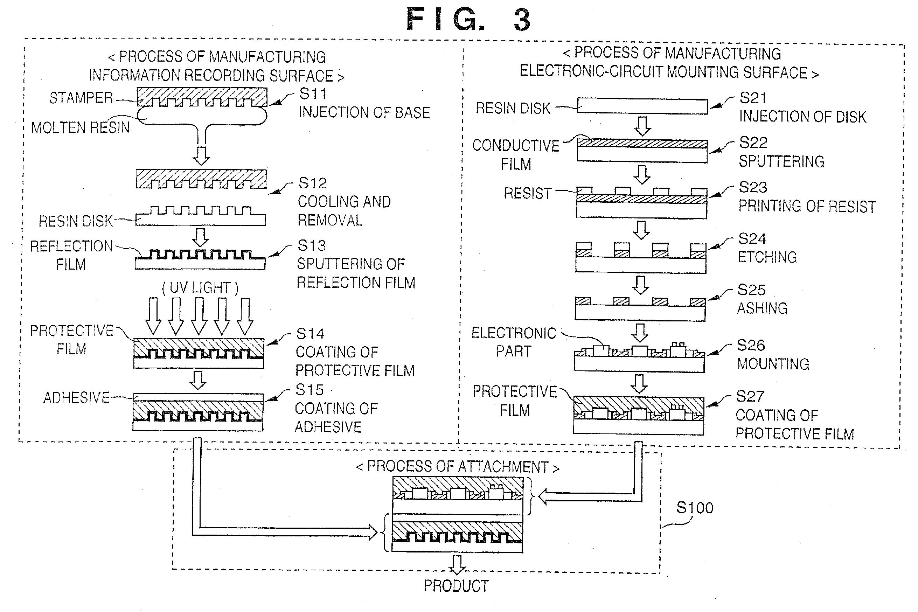

Fig. 3 shows an example of manufacture of the intelligent DVD according to the present embodiment. Fig. 3 is for explaining a significant part of the manufacture processes, inspection at each process and inspection of preparation for delivery and the like are omitted.

As shown in Fig. 3, the manufacture processes of the intelligent DVD comprise a process of manufacturing an information recording surface, a process of manufacturing an electronic-circuit mounting surface, and a process of attaching these surfaces to each other. Further, Fig. 3 shows manufacture processes in correspondence with a DVD manufacture processes, however, these processes are not limited to processes of manufacturing a DVD.

### (Process of Manufacturing Information Recording Surface)

Prior to the processes as shown in Fig. 3, the process of manufacturing an information recording surface begins with manufacture of a stamper and proceeds by using the stamper (mother stamper).

Although not shown, the manufacture of the stamper (mother stamper) is generally as follows. First, a glass disk is polished and cleaned. Next, the surface of the glass disk is coated with a photosensitive agent. Then, exposure (cutting) is performed by using laser light with respect to the photosensitive agent. The exposed photosensitive agent is developed so as to form necessary irregularity on the glass disk. Next, the surface of the glass disk is plated with silver, and further, the surface is plated with nickel, and a master stamper is formed by pealing off the nickel portion. Further, the master stamper is plated with nickel again, then removed, thus a mother stamper is completed.

As shown in Fig. 3, the process of manufacturing an information recording surface comprises steps S11 to S15. First, at base injection step S11, molten resin is poured into the stamper. Next, after cooling and removal step S12, the resin is cooled and the resin disk is taken out of the stamper. At step S13, a reflection film is formed on the resin disk by sputtering. At step S14, the disk is coated with a protective film, and set by ultraviolet (UV) light. Further, at step S15, the disk is coated with adhesive, then process proceeds to attaching step S100.

### (Process of Manufacturing Electronic-Circuit Mounting Surface)

The process of manufacturing an electronic-circuit mounting surface comprises steps S21 to S27 in Fig. 3.

First, at step S21, a resin disk is formed by injection. Next, at step S22, a conductive film is formed by sputtering. At step S23, resist is printed (coated) at wiring portion of the circuit. Although omitted in Fig. 3, the resist is dried naturally or by using UV light. At step S24, portions not coated with the resist are etched. The etching may be dry etching or wet etching. At step S25, after the completion of the etching, ashing is performed to remove the resist printed at step S23. Also, the ashing may be dry ashing or wet ashing. Further, the ashing may be omitted in accordance with the type of the resist.

Next, the process proceeds to step S26, at which electronic devices and parts are mounted. The electronic parts mounted at step S26 may be functionally individual (discrete) parts or devices, or electronic devices mounted on a printed circuit board, a flexible printed circuit board, a ceramic substrate, or other insulating substrates. Further, the respective electronic devices may comprise a combination of logic devices, a gate array, a single-chip micro computer or an SOC (System On Chip). Further, the electronic devices may respectively comprise a semiconductor circuit formed on a silicon substrate, a ceramic substrate or an insulating substrate (SOI: Silicon On Insulator) as a chip, or further, may respectively comprise a semiconductor circuit directly formed on the electronic-circuit mounting surface. When the electronic parts have been mounted, the process proceeds to step S27, at which a protective film is formed or coated on the electronic-circuit mounting surface. The protective film or layer may be formed in accordance with necessity.

### (Attaching Process)

As it is understood from Fig. 3, the information recording surface where the manufacture of information recording surface has been completed, and the electronic-circuit mounting surface where the manufacture of electronic-circuit mounting surface has been completed, are attached to each other at step S100, thus, the storage medium is completed as a product.

Note that the manufacture of the intelligent DVD in Fig. 3 shows a case where the information recording surface and the electronic-circuit mounting surface are separately manufactured and attached to each other. However, the intelligent DVD according to the present invention may be manufactured by manufacturing an information recording surface and forming an electronic-circuit mounting surface, including an electronic circuit at least at one portion, on the rear surface of the information recording surface. Further, the intelligent DVD may be manufactured by manufacturing an electronic-circuit mounting surface and forming an information recording surface on the rear surface of the electronic-circuit mounting surface. In these cases, the above-described process of manufacturing an information recording surface and the process of manufacturing an electronic-circuit mounting surface are replaced with each other.

Note that the present invention provides similar advantages when applied to an optical disk such as a magnetic disk, a magnetic card or a CD, a magneto-optical disk such as an MO, an optical card, or a magneto-optical card, as well as a DVD, and the scope of the storage medium of the present invention includes these media.

As described above, by integrating a storage medium with electronic circuits adapted to the storage medium, the present invention can provide a storage medium having intelligence which reduces load on a system main body in processing information stored in the storage medium, and further manage and control an external system device, and a method for manufacturing the storage medium.

Especially, the manufacturing method of the present invention is appropriate to manufacture of a DVD.

The present invention is not limited to the above embodiments and various changes and modifications can be made within the spirit and scope of the present invention. Therefore, to appraise the public of the scope of the present invention, the following claims are made.

## Claims

1. A storage medium comprising an information recording surface, and an electronic circuit adapted to control an external system and a power source mounted on the storage medium, wherein the power source is adapted to supply power to said external system and is adapted to play the role of an authentication card when the electronic circuit is used to control said external system.

2. A storage medium comprising:
an information recording surface for recording information; and
an electronic-circuit mounting surface where electronic circuits are mounted at least on one portion.

3. The storage medium according to claim 1 or 2, wherein said storage medium has a front surface and a rear surface,
and wherein said information recording surface is one of the front and rear surfaces, while said electronic-circuit mounting surface is the other one of the front and rear surfaces.

4. The storage medium according to claim 1, 2, or 3, wherein said at least one electronic circuit includes an electronic device mounted on an insulating substrate including a printed circuit board and a ceramic substrate.

5. The storage medium according to claim 1, 2, 3 or 4, wherein said at least one electronic circuit includes a semiconductor circuit formed on a silicon wafer, a ceramic substrate or an insulating substrate.

6. The storage medium according to any one of claims 1 to 5, wherein said at least one electronic circuit has a layered structure.

7. The storage medium according to any one of claims 1 to 6, wherein said at least one electronic circuit has communication means for communicating with outside.

8. The storage medium according to claim 7, wherein said communication means includes a contact-type or non-contact type contact.

9. The storage medium according to claim 7 or 8, wherein said communication means transmits energy superimposed with a signal.

10. The storage medium according to any one of claims 1 to 9, wherein said at least one electronic circuit has power means for storing energy supplied from a battery which generates energy from inside, or from outside via a contact point, optical means, wireless means or induction.

11. The storage medium according to any one of claims 1 to 10, wherein said storage medium includes a magnetic disk, an optical disk such as a CD or a DVD, a magneto-optical disk such as an MO, an optical card, or a magneto-optical card.

12. A method for manufacturing a storage medium where electronic circuits are mounted as described in the description.
